# EUROPEAN PATENT APPLICATION

(11) **EP 1 705 861 A1**
(43) Date of publication of application: **27.09.2006**
(21) Application number: 06075493.4
(22) Date of filing: 03.03.2006
(51) Int. Cl.: H04L 29/06, G06Q 30/00

(54) **Real-time synchronous multi-regional distributed media environment system**

(30) Priority: 16.03.2005 US 81458
(71) Applicant: Delphi Technologies, Inc., Troy, MI 48007 (US)
(72) Inventor: Hilmer, Frederick W., Carmel, IN 46032 (US)
(74) Representative: Denton, Michael John

(57) **Abstract**

A receiver (1) is provided to allow remote control of presentation of content information at a plurality of distributed locations.

## Description

### TECHNICAL FIELD

The present invention relates generally to a media reception system and relates more particularly to an audio reception system having remote control of the audio signal presented.

### BACKGROUND OF THE INVENTION

Distributed audio systems are currently limited to single building applications. In order to have multiple building distributed audio, the buildings must be located in the same region. In order to maintain a consistent audio environment in buildings not located within the same region, the audio content must be stored on media and physically distributed for non real-time distribution to multiple regions.

### SUMMARY OF THE INVENTION

Commercial businesses expend capital to provide a desired public image and to provide a desired consumer experience. The consumer experience is at least partially influenced by the environment in which the consumer is located. Accordingly, the environment may be designed and engineered to assist in providing the consumer with the desired experience. Among the attributes of an engineered environment are pieces configured to appeal to a consumer's senses. One such piece is providing audio to consumers to assist in the creation of the desired environment. Accordingly, a method and device for providing real-time media content to a distributed environment is described herein.

According to a first embodiment of the present invention, in a distributed content display system including a source of media content, a media unit is provided comprising a receiver for receiving content information from the source of media content and for receiving a controller signal; and a controller for controlling the reception of the receiver according to the controller signal.

According to a second embodiment of the present invention, a method of distributing a common content signal is provided. The method includes the step of providing a first receiver and a second receiver, the first and second receivers configured to receive a control signal, the control signal designating the first receiver and the second receiver to receive the common signal from a first source.

According to another embodiment of the present invention, a media device is provided. The media device includes a receiver for receiving a media signal; a transmitter for simultaneously transmitting a controller signal to at least one remote site; a first controller configured to select a receiving mode of the media device; and a second controller configured to select a receiving mode of a media device located at the at least one remote site.

According to yet another embodiment of the present invention, a method of creating a uniform content environment is provided. The method includes the steps of providing a receiver at each of a plurality of remote sites, each of the receivers capable of performing a receiving function; obtaining a common content signal by each receiver; obtaining a controller signal by each receiver, the controller signal directing a first receiver located at the first site to display the common content signal at the first site; and directing at least a second receiver located at a second site to perform the receiving function to receive the common content signal and to display the common content signal such that the first and second sites substantially simultaneously display the common content signal.

### BRIEF DESCRIPTION OF THE DRAWINGS

The above-mentioned and other features and objects of this invention, and the manner of attaining them, will become more apparent and the invention itself will be better understood by reference to the following description of embodiments of the invention taken in conjunction with the accompanying drawings, wherein:
Figure 1 is a diagram of a distributed media environment utilizing one receiver as a transmitter;
Figure 2 is a diagram of a second embodiment distributed media environment utilizing a remote tuning control interface; and
Figure 3 is a diagram of a receiver used in the media environment of Figure 1.

Corresponding reference characters indicate corresponding parts throughout the several views. Although the drawings represent embodiments of the present invention, the drawings are not necessarily to scale and certain features may be exaggerated in order to better illustrate and explain the present invention. The exemplifications set out herein illustrate embodiments of the invention in several forms and such exemplification is not to be construed as limiting the scope of the invention in any manner.

### DESCRIPTION OF THE PREFERRED EMBODIMENT

The embodiments discussed below are not intended to be exhaustive or limit the invention to the precise forms disclosed in the following detailed description. Rather, the embodiments are chosen and described so that others skilled in the art may utilize their teachings.

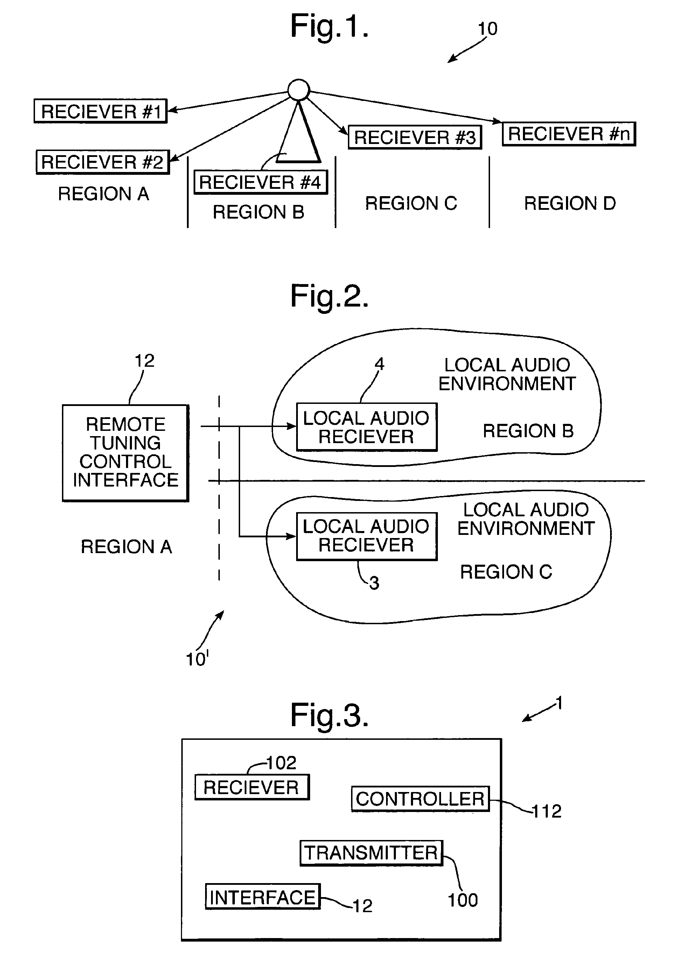

As shown in Figure 1, a distributed media system 10 includes a plurality of locations/regions A, B, C, D. Each region A, B, C, D includes at least one receiver 1, 2, 3, 4, n. The notation of the receiver in region D as "n" is used to indicate that any number of regions and receivers could be used. Each receiver 1-n is part of a local media display system. One type of a media system is an audio system. In the case of an audio system, each local media system includes at least one audio receiver, at least one speaker, and speaker connections such as wire or a wireless connection to connect each speaker with the receiver. Alternative media may include video, text, or other visual displays.

As shown in Figure 3, each receiver 1-n includes internal receiver 102 and controller 112 configured to receive a common media signal including content information and a control signal. The signal may be transmitted over VHF, UHF, or RF waves, over the internet (TCP/IP), over satellite communication such as satellite radio, or any other communication mode that provides for multiple distributed receivers to substantially simultaneously receive a common signal. Additionally, each receiver 1-n may optionally include interface 12 and transmitter 100 that provide for at least partial control over the other remotely located receivers. Simultaneous reception of the common signal further allows simultaneous display of the content information contained within the signal.

Interface 12 includes an input device such as a keyboard, touchpad, or any other input device known in the art. Interface 12 may be integrated with a receiver 1-n as in Figures 1 and 3, or may be a stand alone device in distributed media system 10' as shown in Figure 2. The input device allows a user to select a local receiver, if present, or any remote receiver. Once selected, the user may see the settings of the selected receiver and may then change the settings for the selected receiver via a controller signal. Alternatively, interface 12 may include functionality to allow a user to select all receivers or a plurality of receivers such that changes to the settings are implemented at all selected receivers via the controller signal. Such settings include picking an input to receive and any other function of the receiver. Accordingly, interface 12 allows both the remote selecting and the remote monitoring of the receivers 1-n. Interface 12 may include a webpage therein to guide a user through the local and remote controls. Furthermore, the embodiment of interface 12 as a stand alone device may be a PC with software thereon that allows the PC to control the receivers via an internet connection (TCP/IP) or otherwise. It should be appreciated that alternatively to having a single interface 12 to control both local and remote settings, there may be one interface 12 to control local settings and a second interface 12 to control remote settings.

Figure 1 shows receiver 4 in region B acting as a source of the controller signal and receivers 1, 2, 3, n acting as slaves of the controller signal. If desired, all regions may simultaneously display a common signal at the distributed locations. However, regions may switch away from the common signal if desired, either by so specifying in a control message or by overriding remote instructions through local interface 12. In a commercial setting, certain regions may wish to switch away for a variety of reasons including the region not participating in a promotion being advertised on the common signal or the region having a unique promotion with its own unique media signal. Furthermore, remote control interface 12 includes a lockout function to prevent individuals at the regions from altering the settings. It should be appreciated that the media system may have a plurality of transmitters/sources that each receiver may locally or remotely choose to receive via control interface 12. Accordingly, regions A-D can be placed in groups such that each group receives a different input. Such groupings can be useful when the media network spans multiple time zones and the commercial retailer's sales are at least partially time of day dependent, such as a restaurant.

Figure 2 shows another embodiment of the present invention including an interface 12 and two receivers 3, 4. In this embodiment, region A is a control site such as a corporate headquarters or another area where customers are not typically present. Accordingly, it is not necessary that region A receive a media signal. However, administrators at the headquarters of region A are able to control receivers 1-n without having a fully functional receiver locally. Additionally, as previously mentioned interface 12 may be a PC and may have a feature thereon that allows the remote receivers to be locked on the settings placed by interface 12 of region A. In yet another alternative, interface 12 may include a wireless controller that interfaces with an antenna that is coupled to the internet.

While this invention has been described as having an exemplary design, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. In a distributed content display system (10) including a source of media content, a media unit (1) comprising:
a receiver (102) for receiving content information from the source of media content and for receiving a controller signal; and
a controller (112) for controlling the reception of the receiver (102) according to the controller signal.

2. The media unit (1) of claim 1, further including a transmitter (100).

3. The media unit (1) of claim 2, wherein the transmitter (100) transmits the control signal.

4. The media unit (1) of claim 2, wherein the controller (112) is adapted to provide a controller signal via the transmitter (100).

5. The media unit (1) of claim 4, wherein the controller (112) has software enabling selection of a remote media unit (2).

6. The media unit (1) of claim 1, wherein the content information is an audio signal and the media unit (1) is configured to display the audio signal.

7. The media unit (1) of claim 1, wherein the controller (112) has software enabling locking the media unit (1) to receive an input upon receipt of a predetermined control signal.

8. A method of distributing a common content signal including the step of:
providing a first receiver (1) and a second receiver (2), the first and second receivers (1, 2) configured to receive a control signal, the control signal designating the first receiver (1) and the second receiver (2) to receive the common signal from a first source.

9. The method of claim 8, further including the step of providing a third receiver (3) that receives the control signal, the control signal designating the third receiver (3) to receive the common signal from a second source.

10. The method of claim 8, further including the step of:
providing a controller (112) at a location remote from the first and second receivers (1, 2), wherein the controller (112) generates the control signal.

11. The method of claim 8, further including the step of:
simultaneously displaying content of the content signal by the first and second receivers (1, 2).

12. The method of claim 8, wherein the control signal is generated by a controller (112) within one of the first and second receivers (1, 2).

13. A media device (1) including:
a receiver (102) for receiving a media signal;
a transmitter (100) for transmitting a controller signal to at least one remote site;
a first controller (112) configured to select a receiving mode of the media device (1); and
a second controller (112) configured to select a receiving mode of a media device (2) located at the at least one remote site.

14. The device of claim 13, wherein the first and second controllers (112) utilize a common interface (12).

15. The device of claim 13, wherein the transmitter (100) transmits the media signal via one method selected from the list including VHF, UHF, RF, microwave, satellite, and TCP/IP.

16. The media device of claim 13, wherein the media device (1) is coupled to a second device (2) including a third controller (112), the third controller (112) being able to select receiving settings of the media device (1).

17. A method of creating a uniform content environment including the steps of:
providing a receiver (1, 2, 3, 4, n) at each of a plurality of remote sites, each of the receivers (1, 2, 3, 4, n) capable of performing a receiving function;
obtaining a common content signal by each receiver (1, 2, 3, 4, n);
obtaining a controller signal by each receiver (1, 2, 3, 4, n), the controller signal directing a first receiver (1) located at the first site to display the common content signal at the first site; and directing at least a second receiver (2) located at a second site to perform the receiving function to receive the common content signal and to display the common content signal such that the first and second sites substantially simultaneously display the common content signal.

18. The method of claim 17, wherein the controller signal is generated by a controller (112) that is part of the first receiver.

19. The method of claim 17, wherein the controller signal is generated by a controller (112) that is separate from the first receiver and separate from the second receiver.

20. The method of claim 17, wherein the controller signal is generated by a controller (112) that is located at the second site.
